# EUROPÄISCHE PATENTANMELDUNG

(11) **EP 2 161 221 A1**
(43) Veröffentlichungstag der Anmeldung: **10.03.2010**
(21) Anmeldenummer: 08015520.3
(22) Anmeldetag: 03.09.2008
(51) Int. Cl.: B65G 15/32, B65G 15/40, B65G 15/54

(54) **Vorrichtung zur Herstellung von Schichtmaterial**

(71) Anmelder: Heimbach GmbH & Co.KG, 52353 Düren (DE)
(72) Erfinder: Robens, Andreas, 47803 Krefeld (DE); Kaldenhoff, Ralf Dr., 52072 Aachen (DE)
(74) Vertreter: Paul, Dieter-Alfred

(57) **Zusammenfassung**

Vorrichtung zur Herstellung von Schichtmaterial mit einem Transportband (5), das mittels einer Umlaufeinrichtung in eine Umlaufbewegung bringbar ist, sowie mit einer dem Transportband (5) zugeordneten Aufgabeeinrichtung (11), über die Material zwecks Ausbildung des Schichtmaterials auf das Transportband (5) aufgebbar ist, welche dadurch gekennzeichnet ist, dass das Transportband (5) in Querrichtung eine solche Biegsamkeit aufweist, dass seine Randbereiche (15, 25) bei eben bleibendem Zwischenbereich (32) hochbiegbar sind, und dass die Vorrichtung eine Führungseinrichtung (26, 35, 41, 47, 50, 54, 62, 71, 76, 79) zumindest im Bereich der Aufgabeeinrichtung (11) aufweist, mittels der die Randbereiche (15, 25) des Transportbandes (5) bei dessen Umlauf hochgebogen werden.

## Beschreibung

Die Erfindung betrifft eine Vorrichtung zur Herstellung von Schichtmaterial mit einem Transportband, das mittels einer Umlaufeinrichtung in eine Umlaufbewegung bringbar ist, sowie mit einer dem Transportband zugeordneten Aufgabeeinrichtung, über die Material zwecks Ausbildung des Schichtmaterials auf das Transportband aufgebbar ist.

Zur Herstellung von Produkten in einem bestimmten Aggregat- und Formzustand ist es bekannt, das Material, aus dem die Produkte bestehen sollen, mittels einer Aufgabeeinrichtung auf das Obertrum eines umlaufenden Transportbandes aufzugeben, wo es seine gewollte Formgebung erhält und aufgrund von Temperatureinflüssen mittels Kühl- oder Heizeinrichtungen in den gewünschten Aggregatzustand versetzt wird. Am Ende des Obertrums wird das auf diese Art gewonnene Produkt von dem Transportband abgeworfen oder abgestreift und dann seiner weiteren Bestimmung zugeführt.

Bei einem Verfahren wird das zunächst in der Aufgabeeinrichtung durch Aufschmelzen verflüssigte oder in flüssiger oder pastöser Form vorliegende Material mittels einer als Portioniereinrichtung ausgebildeten Aufgabeeinrichtung in Tropfen- oder Streifenform auf das Transportband aufgebracht, wo es aufgrund der Wärmeabgabe an das Transportband und/oder unter Einfluss einer zusätzlichen Kühleinrichtung beim Weiterlaufen des Transportbandes in pastillenartiger Form erstarrt (vgl. EP 1 721 842 A2, DE 39 02 957 C1, DE 40 13 405 C1, EP 0 244 849 B1). In analoger Weise kann auch Schichtmaterial hergestellt werden, indem mittels einer entsprechend angepassten Aufgabeeinrichtung ein kontinuierlicher Materialstrom in plastifizierter Form auf das Transportband aufgegeben wird, wo es zu einem festen Schichtmaterial abkühlt und dann in Schichtform von dem Obertrum des Transportbandes abgenommen wird. Umgekehrt besteht grundsätzlich auch die Möglichkeit, das Material in festem Aggregatzustand auf das Transportband aufzugeben und es während des Umlaufs des Transportbandes mittels einer Heizeinrichtung zu plastifizieren oder aufzuschmelzen und dann in diesem Aggregatzustand von dem Transportband abzunehmen.

Für die vorgenannten Vorgänge geeignete Vorrichtungen bestehen im Wesentlichen aus zwei im erheblichem, meist mehrere Meter weiten Abstand angeordneten Umlenkwalzen, von denen wenigstens eine angetrieben ist, einem um die Umlenkwalzen gespannten Transportband und der Aufgabeeinrichtung. Dabei sind die Umlenkwalzen so angeordnet, dass sich das Obertrum des Transportbandes in der Regel in einer horizontalen Ebene bewegt. In Drehrichtung zu Beginn des Obertrums und oberhalb dessen ist die Aufgabeeinrichtung angeordnet, mittels der das zu verarbeitende Material in der gewünschten Aggregatform auf das Obertrum aufgegeben wird.

Als Transportband wurden seit langer Zeit solche aus Stahl eingesetzt, weil sie die Wärme aufgrund ihrer guten Wärmeleitfähigkeit wirksam abführen (oder im umgekehrten Fall zuführen). Ihre Montage ist jedoch nicht einfach. Außerdem erfordern Stahlbänder Umlenkwalzen mit großem Durchmesser. Diese Nachteile sind durch Transportbänder mit einem textilen Träger beseitig worden, der in einer Matrix aus Kunststoffmaterial eingebettet ist und der Wärmeleitfäden aufweist, die an den Außenseiten des Transportbandes vorstehen und für eine gute Wärmeleitfähigkeit sorgen (vgl. EP 1 721 842 A1). Solche Transportbänder können aufgrund ihrer hohen Flexibilität auch über Transportwalzen mit kleinem Durchmesser geführt werden. Außerdem ist die Montage einfach.

Besondere Anforderungen werden gestellt, wenn nicht pastillenartige Produkte hergestellt werden sollen, sondern ein kontinuierliches Schichtmaterial. In solchen Fällen müssen Vorkehrungen getroffen werden, damit das auf das Transportband aufgetragene Material nicht an den Seiten abläuft, insbesondere wenn Schichtmaterial nicht unerheblicher Dicke erzeugt werden soll. Hierzu ist es bei aus Stahl bestehenden Transportbändern bekannt, dem Obertrum im Bereich der Aufgabeeinrichtung und in Laufrichtung danach eine im Querschnitt leicht muldenförmige Wölbung zu geben, so dass die Ränder des Transportbandes höher liegen als die Mitte. Wegen der geringen Biegsamkeit von Stahl stellt sich jedoch eine über die gesamte Breite des Transportbandes gehende Wölbung ein, so dass es mit dieser Methode nicht möglich ist, ein Schichtmaterial mit einer über dessen Breite konstanten Dicke zu erzeugen. Außerdem ist nur eine geringe Wölbung des Transportbandes und damit eine geringe Schichtdicke erzielbar, und es ist ein erheblicher konstruktiver Aufwand erforderlich.

Sofern Schichtmaterial konstanter Dicke hergestellt werden soll, werden auf das Transportband an beiden Seiten Stauleisten aufvulkanisiert oder mechanisch befestigt. Die Vulkanisationsverbindung hat den Nachteil, dass das Transportband nur in einem Temperaturbereich bis maximal 100 °C eingesetzt werden kann. In vielen Fällen befindet sich jedoch das aufzubringende Material auf einer höheren Temperatur. Außerdem ist die Höhe solcher Stauleisten begrenzt, da sie sich der Biegung des Transportbandes an den Transportwalzen widersetzen, es sein denn, es werden Transportwalzen besonders großen Durchmessers verwendet.

Der Erfindung liegt die Aufgabe zugrunde, eine Vorrichtung zur Herstellung von Schichtmaterial bereitzustellen, die kompakt ausgebildet werden kann und mit der sich schmelzflüssiges Material auch hoher Temperatur problemlos verarbeiten lässt.

Diese Aufgabe wird erfindungsgemäß dadurch gelöst, dass ein Transportband verwendet wird, das in Querrichtung eine solche Biegsamkeit aufweist, dass seine Randbereiche bei eben bleibendem Zwischenbereich hochbiegbar sind, und dass die Vorrichtung eine Führungseinrichtung zumindest im Bereich der Aufgabeeinrichtung aufweist, mittels der die Randbereiche des Transportbandes bei dessen Umlauf hochgebogen werden. Grundgedanke der Erfindung ist es, ein Transportband hoher Biegsamkeit zumindest an den Übergängen vom Zwischenbereich zu den Randbereichen zu verwenden, so dass die Randbereiche des Transportbandes hochgebogen werden können, ohne dass es in dem Zwischenbereich zwischen den Randbereichen zur Ausbildung einer Wölbung kommt, dieser Bereich vielmehr eben bleibt. Auf diese Weise kann ein Schichtmaterial mit über die Breite konstanter Dicke hergestellt werden, wobei die Breite des Schichtmaterials beliebig sein kann und je nach Höhe der hochgebogenen Randbereiche auch sehr dicke Schichtmaterialien erzeugbar sind.

Die Länge der Strecke, wo die Randbereiche hochgebogen werden, kann den jeweiligen Anforderungen angepasst werden und sollte wenigstens eine solche Strecke sein, dass gewährleistet ist, dass das Schichtmaterial am Ende der Strecke eine gewisse Eigenfestigkeit erreicht hat, die es daran hindert, seitlich abzufließen, wenn die Randbereiche sich nach Verlassen der Führungseinrichtung wieder flachstellen. Spätestens stellt sich dieser flache Zustand des Transportbandes an der nächstfolgenden Umlenkwalze ein, so dass das Transportband auch über Umlenkwalzen geringen Durchmessers geführt werden kann. Hierdurch kann die Vorrichtung insgesamt sehr kompakt ausgebildet werden.

Transportbänder der erfindungsgemäßen Art können beispielsweise als reine Kunststoffbänder ausgebildet sein, die, wenn sie entsprechend dünn sind, eine hohe Biegsamkeit haben. Ihr Nachteil besteht jedoch darin, dass sie nur eine begrenzte Wärmeleitfähigkeit haben, was der hier gewünschten schnellen Wärmeabfuhr entgegensteht. Statt dessen wird vorgeschlagen, ein Transportband mit einem textilen Träger zu verwenden. Solche Transportbänder haben eine besonders gute, scharnierartige Biegsamkeit. Zudem eröffnet die Verwendung eines textilen Trägers die Möglichkeit, Fäden einzuarbeiten, von denen wenigstens ein Teil Wärmeleitfäden bildet, deren spezifische Wärmeleitfähigkeit höher ist als die von Kunststofffäden. Auf diese Weise kann man dem Transportband eine hohe Wärmeleitfähigkeit geben, über die eine rasche Abkühlung des aufgegebenen Materials erreichbar ist. Die benötigte Wärmeleitfähigkeit kann durch die Anzahl der im textilen Träger vorhandenen Wärmeleitfäden in weiten Grenzen an die jeweiligen Erfordernisse angepasst werden, und zwar bis hin dazu, dass der Träger vollständig aus Wärmeleitfäden hergestellt wird.

Damit das Transportband absolut dicht ist, sollte der textile Träger in einer Matrix aus einem Kunststoffmaterial derart eingebettet sein, dass Wärmeleitfäden wenigstens bis zur Oberfläche der Matrix auf zumindest einer Außenseite gehen. Neben der Dichtheit zeichnet sich ein solches Transportband auch dadurch aus, dass hierdurch eine im Vergleich zu Stahl antiadhäsive Oberfläche gebildet wird, die die Abnahme des Schichtmaterials an der Umlenkwalze erleichtert, ohne dass es hierzu der Verwendung von Antihaft- oder Benetzungsmittel bedarf, die zu einer Verschmutzung des Schichtmaterials führen können. Sofern die Wärmeleitfäden bis zu den Oberflächen der Matrix auf beiden Außenseiten des Transportbandes gehen, ist es zweckmäßig, dass sie einen solchen Verlauf haben, dass sie entweder direkt oder über Kontakt mit anderen Wärmeleitfäden eine Wärmeübertragung von einer Außenseite des Transportbandes zu anderen Außenseite bewirken, so dass die aufgenommene Wärme beispielsweise von einer Kühleinrichtung abgeführt oder an die Umlenkwalzen der Vorrichtung abgegeben werden kann.

Sofern eine glatte oder nur wenig strukturierte Oberfläche insbesondere auf der Außenseite des Transportbandes gewünscht ist, sollten die Wärmeleitfäden nicht oder nicht wesentlich über die Oberfläche der Matrix vorstehen, also mit ihr im Wesentlichen bündig in dieser Oberfläche liegen. Es kann jedoch auch vorgesehen sein, dass die Dicke der Matrix geringer ist als die des Trägers und dass Wärmeleitfäden auf zumindest einer Außenseite, im Bedarfsfall auch auf beiden Außenseiten, über die Matrix vorstehen, aus ihr also nicht unwesentlich herausragen.

Nach der Erfindung ist ferner vorgesehen, dass der textile Träger derart ausgebildet ist, dass die in ihm enthaltenen Wärmeleitfäden zwischen den Außenseiten des Bandes hin- und herwechseln. Dabei sollten Wärmeleifäden an der bzw. den Außenseiten des Transportbandes, wo sie bis wenigstens zur Oberfläche der Matrix gehen, 10 bis 40, vorzugsweise 25 bis 45 Kontaktpunkte pro cm² bilden, wobei deren Flächen jeweils 15 bis 30 % der jeweiligen Oberfläche des Transportbandes einnehmen. Bei diesen Werte ist eine sehr gute Wärmeleitfähigkeit in Dickenrichtung gewährleistet.

Die Wärmeleitfäden bestehen zweckmäßigerweise zumindest teilweise aus Metallen, zum Beispiel Kupfer, Messing, Aluminium, Silber oder aus Legierungen davon, aber auch aus Kohlenstoff und/oder aus Kombinationen von Metall und Kohlenstoff. Durch die Wahl des Materials für die Wärmeleitfäden kann ebenso wie durch deren Anzahl, Dicke und Anordnung die Wärmeleitfähigkeit des Transportbandes in Dickenrichtung optimal an die jeweiligen Anforderungen angepasst werden.

In Sonderheit können die Wärmeleitfäden einen Seelenfaden aufweisen, der von wenigstens einem Draht oder Bändchen umwickelt ist oder um den Drähte oder Bändchen verseilt sind, die aus einem Material bestehen, dessen spezifische Wärmeleitfähigkeit größer ist als die des Seelenfadens, vorzugsweise aus einem gut wärmeleitfähigen Metall.

Es versteht sich, dass der Träger vollständig aus Wärmeleitfäden bestehen kann, also beispielsweise aus einem reinen Metallgewebe. Alternativ dazu besteht die Möglichkeit, neben den Wärmeleitfäden weitere Fäden vorzusehen, deren spezifische Wärmeleitfähigkeit geringer ist als die der Wärmeleitfäden. Hierbei kann es sich um Kunststofffäden handeln, die vorzugsweise eine Temperaturbeständigkeit von mindestens 200 °C haben. Hierfür kommen insbesondere aromatische Polyamide (Aramide) in Frage. Ein solcher Träger zeichnet sich durch besondere Biegsamkeit aus, sowie dadurch, dass auch Materialien mit hoher Schmelztemperatur verarbeitet werden können.

Die Fäden, aus denen der textile Träger hergestellt ist, können als monofile, multifile oder verseilte geflochtene Fäden, Fasergarne, Litzen, Kabel, Bändchen, Zwirne, texturierte Garne und/oder gebundene Garne ausgebildet sein. Der Träger selbst ist vorzugsweise als zusammenhängendes textiles Flächengebilde ausgebildet, wobei in erster Linie die Ausbildung als Gewebe in Frage kommt. Aber auch andere textile Fadengebilde bieten sich an, beispielsweise Gewirke, Gestricke, Fadengelege, Abstandsgewebe oder -gewirke.

Soweit der Träger als Gewebe ausgebildet ist, hat es sich als vorteilhaft erwiesen, wenn die Schussfäden im wesentlichen gerade verlaufen und die Kettfäden außen vorstehende Kröpfungen bilden und diese zumindest teilweise als Wärmeleitfäden ausgebildet sind. Über den Durchmesser der Kett- und Schussfäden kann die Höhe der Kröpfungen der Kettfäden eingestellt werden. Es versteht sich, dass die Wärmeleitfähigkeit des Transportbandes in Dickenrichtung durch die Art der Gewebebindung und durch die Fadendichte beeinflusst werden kann. Dabei können auch mehrlagige Gewebe zum Einsatz kommen.

Nach einem weiteren Merkmal der Erfindung ist vorgesehen, dass in der Matrix Wärmeleitteilchen verteilt sind, deren spezifische Wärmeleitfähigkeit höher ist als die des Kunststoffmaterials der Matrix. Hierbei kann es sich um Pulver und/oder Fasern handeln, die aus den schon oben genannten Materialien für die Wärmeleitfäden bestehen.

Ferner besteht die Möglichkeit, in die Matrix Füllmaterialien einzulagern, deren spezifisches Gewicht geringer ist als das des Kunststoffmaterials, um auf diese Weise das Gewicht des Transportbandes und dessen Biegsamkeit zu beeinflussen. Als Füllmaterialien kommen beispielsweise Gasblasen in Frage, so dass die Matrix Schaumcharakter hat. Es können aber auch Pulver und/oder Mikrokugeln eingelagert werden. Der Anteil aus gegebenenfalls vorhandenen Füllmaterialien und/oder Wärmeleitteilchen kann 10 bis 60 Gew.-% der Matrix ausmachen.

Das Kunststoffmaterial für die Matrix ist zweckmäßigerweise bis mindestens 200 °C beständig. Hierbei kann es sich beispielsweise um ein Elastomer handeln. In Frage kommen Silikonelastomere, Fluorelastomere und/oder Fluorsilikonelastomere. Solche Elastomere zeichnen sich durch besonders hohe antiadhäsive Wirkung aus. Statt dessen kann aber auch ein Harz vorgesehen sein, beispielsweise Silikonharz, Polyurethanharz oder ein elastisches Polyacrylat. Vorzugsweise sollte die Matrix den Träger lükkenlos ausfüllen.

Die Matrix kann 15 bis 40 Gew.-% des Gewichts des Transportbandes insgesamt bilden. Besonders zweckmäßig haben sich Werte zwischen 20 bis 30 Gew.-% erwiesen. Die Dicke des Bandes liegt vorzugsweise im Bereich zwischen 0,75 bis 3 mm.

In bevorzugter Ausführung ist das Transportband nicht endlos, d.h. geschlossen, sondern an zumindest einer Stelle unter Bildung von Stirnkanten quergeteilt, wobei die Stirnkanten über eine Kupplungseinrichtung verbunden sind. Auf diese Weise kann das Transportband bequem in die zugehörige Vorrichtung eingelegt und dann in der Vorrichtung geschlossen werden. Besonders zweckmäßig ist eine sogenannte Steckdrahtnaht als Kupplungseinrichtung. Bei dieser Naht werden an den Stirnkanten des Transportbandes eine Vielzahl von Kupplungsösen ausgebildet, die beim Schließen des Transportbandes in Überlappung gebracht werden, so dass im Überlappungsbereich ein Durchgangskanal entsteht, durch den ein Kupplungsdraht eingeschoben werden kann. Solche Steckdrahtnähte sind beispielsweise als Clippernähte bekannt. Die Kupplungsösen können aber auch durch zwei Drahtwendeln gebildet werden, von denen jeweils eine in eine Stirnkante des Transportbandes eingesetzt wird und die zum Verbinden der Stirnkanten in Überlappung gebracht werden.

Je nach Ausbildung der Kupplungseinrichtung wird im Kupplungsbereich eine Querversteifung des Transportbandes bewirkt. Um das Hochbiegen der Randbereiche des Transportbandes auch dort zu erleichtern und eine Wölbung des Zwischenbereichs zu vermeiden, ist es deshalb von Vorteil, wenn zumindest in solchen Fällen die Kupplungseinrichtung an den Übergängen von den Randbereichen zu dem Zwischenbereich unterbrochen ausgebildet wird.

In gleicher Richtung wirksam ist eine weitere Ausführungsform der Erfindung, bei der das Transportband an den Übergängen von dem Zwischenbereich zu den Randbereichen so ausgebildet ist, dass der Biegewiderstand dort kleiner ist als zumindest im Zwischenbereich. Dies kann beispielsweise bei einem Textilträger dadurch geschehen, dass dort eine geringere Fadendichte vorgesehen wird oder die Matrix - sofern vorhanden - dort eine geringere Dicke hat. Die Randbereiche können dann wieder die Steifigkeit des Zwischenbereichs haben.

Die Führungseinrichtungen zum Hochbiegen der Randbereiche des Transportbandes können in beliebiger Weise ausgebildet sein, sofern sie dazu geeignet sind, die Randbereiche des Transportbandes insbesondere im Obertrum hochzubiegen. Beispielsweise können die Führungseinrichtung Formrollen und/oder Führungsbleche und/oder -stützen aufweisen, die zumindest an der Unterseite des Transportbandes anliegen und derart ausgerichtet sind, dass sie ein Hochbiegen der Randbereiche bewirken. Dabei kann auch vorgesehen sein, dass die Formrollen bzw. Führungsbleche und/oder -stützen so ausgebildet sind, dass sie nicht nur die Randbereiche des Transportbandes, sondern auch dessen Zwischenbereich zumindest teilweise unterstützen. Dies begünstigt die Beibehaltung einer ebenen Oberfläche des Zwischenbereichs. Des weiteren kann es zweckmäßig sein, dass die Führungseinrichtung Führungsrollen, Führungsbleche und/oder Führungsstützen aufweist, die derart angeordnet und ausgebildet sind, dass sie die Randbereiche des Transportbandes auch obenseitig einfassen, die Randbereiche also beidseitig eingefasst sind.

Anstatt einer mechanischen Führung der Randbereiche kann auch eine pneumatische Führung vorgesehen sein, beispielsweise derart, dass auf zumindest die Randbereiche des Transportbandes gerichtete pneumatische Strahldüsen vorgesehen sind, über die ein derartiger Luftdruck auf die Randbereiche ausübbar ist, dass ein Hochbiegen der Randbereiche bewirkt wird.

Je nach Biegsamkeit bzw. Steifigkeit des Transportbandes kann es von Vorteil sein, wenn die Führungseinrichtung wenigstens eine Andrückrolle und/oder wenigstens ein Andrückblech aufweist, die bzw. das derart angeordnet ist, dass sie bzw. es auf der Oberseite des Zwischenbereich zwecks dessen oberer Ausrichtung anliegt. Hierdurch kann die Beibehaltung der ebenen Oberfläche des Zwischenbereichs in dem Bereich, in dem die Randbereiche hochgebogen sind, unterstützt werden. In gleicher Richtung geht der Vorschlag, dass die Führungseinrichtung Unterstützungsrollen oder Unterstützungsflächen aufweist, über die die Unterseite des Zwischenbereichs läuft.

Der Grad des Hochbiegens der Randbereiche kann den jeweiligen Anforderungen, insbesondere hinsichtlich der Dicke des Schichtmaterials, angepasst werden. Vorzugsweise sollten die Randbereiche des Transportbandes um wenigstens 30°, besser noch um wenigstens 45° gegenüber der Horizontalen hochgebogen sein. Dabei sollte die Breite der Randbereiche wenigstens 5 cm, vorzugsweise wenigstens 10 cm betragen.

In an sich bekannter Weise kann die Vorrichtung mit einer Kühleinrichtung zur Kühlung des Transportbandes versehen sein. Diese Kühleinrichtung kann beispielsweise durch eine Kühlwalze gebildet werden, über die das Transportband geführt wird und die über Kühlmittel kühlbar ist. Statt dessen kann beispielsweise auch ein Kühlbad vorgesehen sein, durch dass das Transportband geleitet wird. Auch andere Kühleinrichtungen sind denkbar, um die Aufheizung des Transportbandes zu vermeiden und dem abgelegten Material eine kühle Oberfläche anzubieten.

In der Zeichnung ist die Erfindung anhand von Ausführungsbeispielen näher veranschaulicht. Es zeigen:
- Figur 1: eine Vorrichtung zur Herstellung von Schichtmaterial in der Seitenansicht;
- Figur 2: einen vergrößerten Teilquerschnitt durch das Transportband der Vorrichtung gemäß Figur 1;
- Figur 3: einen Querschnitt durch den Obertrumbereich der Vorrichtung gemäß Figur 1 mit einer ersten Führungseinrichtung;
- Figur 4: einen Querschnitt durch den Obertrumbereich der Vorrichtung gemäß Figur 1 mit einer zweiten Führungseinrichtung;
- Figur 5: einen Querschnitt durch den Obertrumbereich der Vorrichtung gemäß Figur 1 mit einer dritten Führungseinrichtung;
- Figur 6: einen Querschnitt durch den Obertrumbereich der Vorrichtung mit der Führungseinrichtung gemäß Figur 4 und einer zusätzlichen Andrückrolle;
- Figur 7: einen Querschnitt durch den Obertrumbereich der Vorrichtung gemäß Figur 1 mit einer fünften Führungseinrichtung;
- Figur 8: einen Querschnitt durch den Obertrumbereich der Vorrichtung gemäß Figur 1 mit einer sechsten Führungseinrichtung;
- Figur 9: einen Querschnitt durch den Obertrumbereich der Vorrichtung gemäß Figur 1 mit einer siebten Führungseinrichtung;
- Figur 10: einen Querschnitt durch den Obertrumbereich der Vorrichtung gemäß Figur 1 mit einer achten Führungseinrichtung;
- Figur 11: einen Querschnitt durch den Obertrumbereich der Vorrichtung gemäß Figur 1 mit einer neunten Führungseinrichtung; und
- Figur 12: einen Querschnitt durch den Obertrumbereich der Vorrichtung gemäß Figur 1 mit einer Unterstützungsrolle.

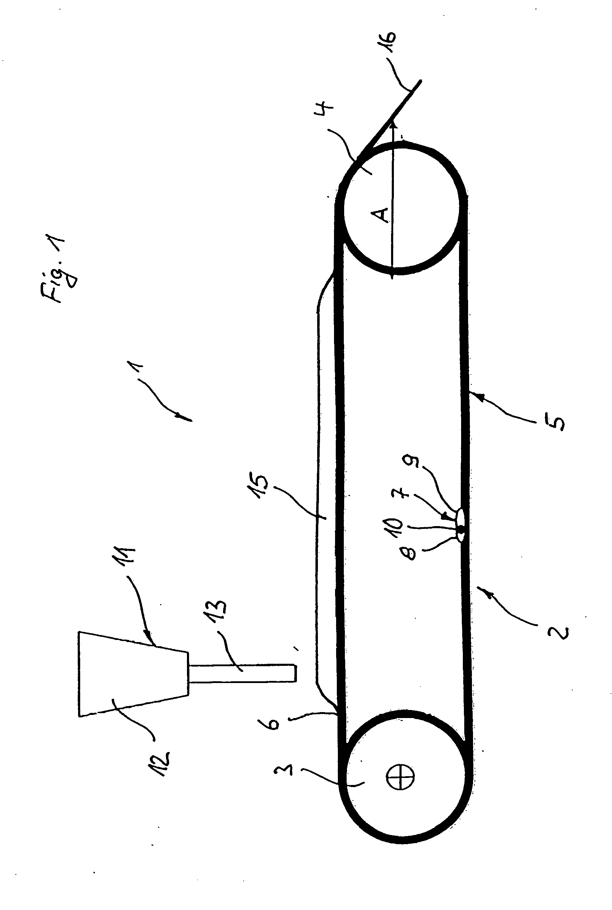

Die in Figur 1 dargestellte Vorrichtung 1 weist eine Transporteinrichtung 2 auf. Sie hat zwei im horizontalen Abstand angeordnete Umlenkwalzen 3, 4 mit sich senkrecht zur Zeichnungsebene erstreckenden Drehachsen, wobei die linke Umlenkwalze 3 von einem Elektromotor im Uhrzeigersinn angetrieben ist und die rechte Umlenkwalze 4 im gleichen Drehsinn mitläuft. Auf die Umlenkwalzen 3, 4 ist ein Transportband 5 aufgezogen, dessen Obertrum 6 aufgrund der Drehrichtung der Umlenkwalzen 3, 4 in Richtung des Pfeils A bewegt wird und eine sich horizontal erstreckende Oberfläche aufweist.

Das Transportband 5 hat eine endliche Länge. Es ist durch eine Kupplungseinrichtung 7 zu einem Endlosband geschlossen. Die Kupplungseinrichtung 7 ist als Clippernaht ausgebildet. Hierzu sind an jeder Stirnkante eine Vielzahl von nebeneinander angeordneten Clipperhaken 8, 9 befestigt, die Ösen ausbilden, die zum Schließen der Kupplungseinrichtung 7 in eine solche Überlappung gebracht worden sind, dass sich im Überlappungsbereich ein sich quer zur Laufrichtung des Transportbandes 5 erstreckender Durchgangskanal ergibt. In diesen Durchgangskanal ist wenigstens ein Kupplungsdraht 10 eingeschoben, der sich über die gesamte Länge der Stirnkanten erstreckt und die Clipperhaken 8, 9 und damit die Stirnkanten des Transportbandes scharnierartig miteinander verbindet. Mit Hilfe dieser Kupplungseinrichtung 7 kann das Transportband 5 in nicht gekuppeltem Zustand einfach um die Umlenkwalzen 3, 4 herumgelegt werden. Dann werden die Clipperhaken 8, 9 in Überlappung gebracht und der Kupplungsdraht 10 eingeschoben. Zur Demontage wird der Kupplungsdraht 10 wieder herausgezogen.

Oberhalb des Obertrums 6 und in kurzem Abstand hinter der linken Umlenkwalze 3 befindet sich eine Aufgabeeinrichtung 11, wie sie im Stand der Technik bekannt ist. Sie hat einen Trichter 12 und darunter eine Aufgabedüse 13, die sich quer über die Breite des Transportbandes 5 erstreckt. In den Trichter 12 wird das Material, aus dem das Schichtmaterial auf dem Transportband 5 gebildet werden soll, in geschmolzener Form vorgehalten. Durch eine entsprechende Steuerung wird das Material über die Aufgabedüse 13 in Schichtform auf die Oberseite des Obertrums 6 aufgegeben. Auf dem Transportband 5 bildet sich aufgrund der Aufgabe des Materials eine Materialschicht, deren Dicke sich durch die Geschwindigkeit des Transportbandes 5 und dem aus der Aufgabeeinrichtung 11 austretenden Materialvolumenstrom beeinflussen lässt. Damit das Material nicht an den Seiten des Transportbandes 5 überfließt, sind beide Randbereiche des Obertrums 6 - von denen hier nur der in dieser Ansicht vorn liegende Randbereich 15 zu sehen ist - mittels einer in Figur 1 nicht näher dargestellten Führungseinrichtung hochgebogen, und zwar beginnend im Bereich der Aufgabeeinrichtung 11 und endend kurz vor der rechten Umlenkwalze 4.

Das Schichtmaterial wird mit dem Obertrum 6 in Richtung des Pfeils A transportiert und gibt dabei Wärme an das Transportband 5 und an die Umgebungsluft ab. Die Umlaufgeschwindigkeit des Transportbandes 5 und die Länge des Obertrums 6 sind so ausgelegt, dass das Schichtmaterial bei Erreichen der rechten Umlenkwalze 4 soweit abgekühlt ist, dass es eine ausreichende Formbeständigkeit erreicht hat, damit es dort mit Hilfe eines an der Oberfläche des Transportbandes 5 anliegenden Abstreifers 16 von der Transportwalze 5 abgenommen und dann weiterverarbeitet werden kann.

Zur Unterstützung des Abkühlvorganges kann die Vorrichtung 1 mit einer hier nicht näher dargestellten Kühleinrichtung versehen sein. Sie kann beispielsweise so ausgebildet sein, dass das Transportband 5 von der Rückseite her mit einer kalten Flüssigkeit, beispielsweise Wasser, angestrahlt wird. Zusätzlich können auch die beiden Umlenkwalzen 3, 4 mit einem Kühlmittel beaufschlagt werden, die deren Mantelseiten auf einer niedrigen Temperatur hält und damit auch das Transportband 5 kühlt.

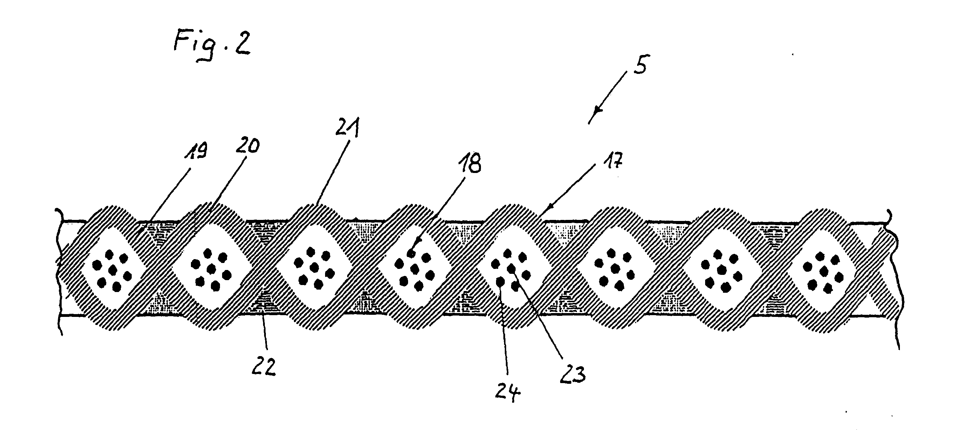

Aus Figur 2 lässt sich der nähere Aufbau des Transportbandes 5 ersehen. Es weist einen textilen Träger 17 auf, der als Gewebe in Leinwandbindung ausgebildet ist. Der Träger 17 hat senkrecht zur Zeichnungsebene und im wesentlichen gerade verlaufende Schussfäden, beispielsweise mit 18 bezeichnet. Die Schussfäden 18 sind eingebunden in Kettfäden 19, 20, die zwischen den Schussfäden 18 die Seiten des Transportbandes 5 wechseln und jeweils ober- und unterhalb der Schussfäden 18 Kröpfungen - beispielhaft mit 21 bezeichnet - ausbilden.

Der Träger 17 ist in einer Matrix 22 aus Silikonelastomer eingebettet. Die Dicke der Matrix 22 ist in diesem Fall etwas geringer als die Dicke des Trägers 17, welche durch die Kettfäden 19, 20 vorgegeben wird. Aus diesem Grund stehen deren Kröpfungen 21 etwas über die Oberfläche der Matrix 22 vor. Es versteht sich, dass die Dicke der Matrix 22 auch so gewählt werden kann, dass die Oberseiten der Kröpfungen 21 bündig mit den Oberflächen der Matrix 22 zu liegen kommen, sich also eine ebene Oberfläche ausbildet.

Die Kettfäden 19, 20 bestehen aus Metallfäden und bilden deshalb Wärmeleitfäden mit hoher spezifischer Wärmeleitfähigkeit. Über ihre Kröpfungen 21 haben die Kettfäden 19, 20 direkten Kontakt mit dem auf die Außenseite des Transportbands 5 aufgegebenen Schichtmaterial und nehmen deshalb dessen Wärme wirksam auf und leiten sie auf die andere Seite des Transportbandes 5. Über die dortigen Kröpfungen 21 der Kettfäden 19, 20 geben sie die Wärme an die Oberfläche der Umlenkwalzen 3, 4 ab, wobei der Kühlvorgang - wie oben beschrieben - noch durch Aufspritzen von kaltem Wasser begünstigt werden kann. Zusätzlich können in die Matrix 22 Wärmeleitteilchen aus Metall oder Kohlenstoff eingelagert werden.

Die Schussfäden 18 weisen jeweils einen Seelenfaden 23 aus einem aromatischen Polyamid auf, um den Metalldrähte - beispielhaft mit 24 bezeichnet - gewickelt sind. Auf diese Weise tragen auch die Schussfäden 18 dazu bei, die Wärmeleitfähigkeit des Transportbandes zu verbessern.

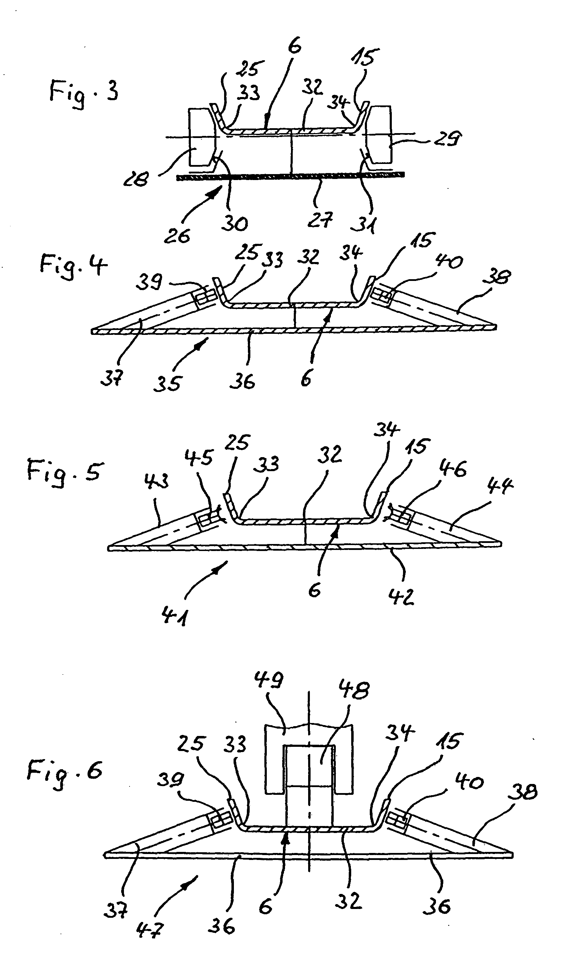

Die Figuren 3 bis 12 zeigen im Querschnitt den Bereich des Obertrums 6 des Transportbandes 5 der Vorrichtung 1 im Querschnitt, wobei verschiedene Führungseinrichtung - allerdings lediglich schematisch - zum Hochbiegen der Randbereiche 15, 25 dargestellt sind. Dazu im einzelnen Folgendes.

Bei dem Ausführungsbeispiel gemäß Figur 3 weist die Führungseinrichtung 26 eine Sockelplatte 27 auf, an der über hier nicht dargestellte Lagerböcke Formwalzen 28, 29 gelagert sind. Die Formwalzen 28, 29 haben horizontale Drehachsen und sind an den einander zugewandten Seiten mit Konusflächen 30, 31 versehen, an denen die Randbereiche 15, 25 im oberen Bereich anliegen. Senkrecht zur Zeichnungsebene sind eine Vielzahl solcher Paare von Formwalzen hintereinander angeordnet, um die Randbereiche 15, 25 über eine Strecke, wie sie aus Figur 1 sichtbar ist, hochzubiegen.

Wie zu sehen ist, sind die Randbereiche 15, 25 scharnierartig gegenüber einem Zwischenbereich 32 hochgebogen. Der Zwischenbereich 32 bleibt dabei eben. Die Randbereiche 15, 25 und der Zwischenbereich 32 gehen über Biegebereiche 33, 34 ineinander über. In den Biegebereichen 33, 34 ist die Kupplungseinrichtung 7 (Figur 1) jeweils unterbrochen, d.h. in diesen Biegebereichen 33, 34 befinden sich keine Clipperhaken 8, 9 (Figur 1), und dort ist auch der Kupplungsdraht 10 (Figur 1) geteilt, d.h. er besteht eigentlich aus insgesamt 3 Abschnitten, 2 für die Randbereiche 15, 25 und 1 für den Zwischenbereich 32. Diese Ausbildung der Kupplungseinrichtung 7 ist auch bei den nachstehend beschriebenen Ausführungsformen vorhanden.

Bei dem Ausführungsbeispiel gemäß Figur 4 hat die Führungseinrichtung 35 ebenfalls eine Sockelplatte 36, von der schräg auf das Transportband 5 bzw. dessen Obertrum 6 gerichtete Lagerböcke 37, 38 ausgehen. An den freien Enden der Lagerböcke 37, 38 befinden sich Formrollen 39, 40, die über ihre Umfangsflächen an den Unterseiten der Randbereiche 15, 25 anliegen, d.h. deren Drehachsen verlaufen parallel zu den Ebenen der jeweils zugehörigen Randbereiche 15, 25. Die Wirkung ist die gleiche wie bei der Führungseinrichtung 26 gemäß Figur 3, d.h. die Randbereiche 15, 25 werden hochgebogen unter Beibehaltung der Ebenheit des Zwischenbereichs 32. Es versteht sich, dass auch bei dieser Führungseinrichtung 35 eine Vielzahl solcher Formrollen 39, 40 senkrecht zur Zeichnungsebene hintereinander angeordnet sind, um die Randbereiche 15, 25 über den aus Figur 1 erkennbaren Bereich hochgebogen zu halten.

Das Ausführungsbeispiel gemäß Figur 5 hat eine Führungseinrichtung 41 mit einer Sockelplatte 42, auf der hintereinander senkrecht zur Zeichnungsebene eine Vielzahl von schräg auf das Obertrum 6 gerichteten Böcken 43, 44 angebracht sind. An den freien Enden der Böcke 43, 44 sind Luftdüsen 45, 46 vorgesehen, aus denen im Betrieb Luft mit einem solchen Druck austritt, dass der auf die Unterseiten der Randbereiche 15, 25 einwirkende Luftdruck ein Hochbiegen der Randbereiche 15, 25 bewirkt.

Das Ausführungsbeispiel gemäß Figur 6 zeigt eine Führungseinrichtung 47, die gegenüber der Führungseinrichtung 35 gemäß Figur 4 dadurch ergänzt worden ist, dass sie zusätzlich eine auf der Oberseite des Zwischenbereichs 32 des Obertrums 6 abrollende Andrückrolle 48 mit horizontaler Drehachse in der Zeichnungsebene aufweist, welche in einem Lagerbock 49 drehbar gehalten ist. Die Andrückrolle 48 ist in Laufrichtung des Transportbandes 5 gesehen vor der Aufgabeeinrichtung 11 angeordnet. Sie trägt dazu bei, dass der Zwischenbereich 32 trotz hochgebogener Randbereiche 15, 25 eben bleibt. Es versteht sich, dass die Andrückrolle 48 auch die volle Breite des Zwischenbereichs 32 einnehmen kann. Ansonsten stimmt die Führungseinrichtung 47 mit der Führungseinrichtung 35 gemäß Figur 4 überein, so dass für diesen Teil der Führungseinrichtung 47 die gleichen Bezugsziffern verwendet worden sind. Zur Erläuterung dieser Bezugsziffern wird auf die Beschreibung des Ausführungsbeispiels gemäß Figur 4 verwiesen.

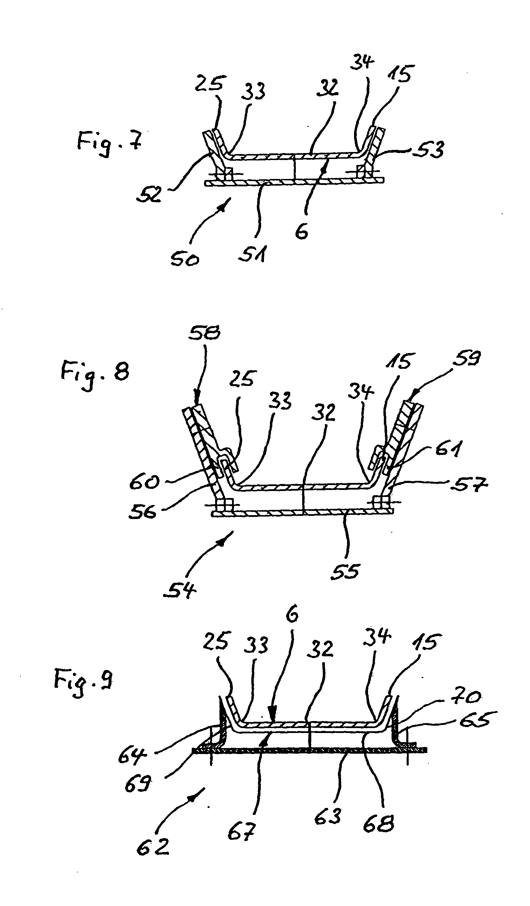

Die in Figur 7 dargestellte Führungseinrichtung 50 weist eine Sockelplatte 51 auf, von der zwei seitliche Führungsbleche 52, 53 hochstehen, die sich senkrecht zur Zeichnungsebene über den in Figur 1 für den Randbereich 15 dargestellten Bereich erstrecken. Die Führungsbleche 52, 53 sind schräg nach außen angewinkelt. Zwischen ihnen verläuft das Obertrum 6 des Transportbandes 5, wobei die Führungsbleche 52, 53 für das Hochbiegen der Randbereiche 15, 25 sorgen. Die Unterseiten der Randbereiche 15, 25 liegen dabei an den einander zugewandten Seiten der Führungsbleche 52, 53 in deren abgewinkelten Bereichen an.

In Figur 8 ist eine weitere Führungseinrichtung 54 dargestellt. Sie hat ebenfalls eine Sockelplatte 55, von der Haltebleche 56, 57 schräg nach außen gerichtet hochstehen. An den einander zugeordneten Seiten der Haltebleche 56, 57 sind Führungsbleche 58, 59 befestigt, die untenseitig in Führungsgabeln 60, 61 auslaufen, die nach unten hin offen sind. Die Führungsgabeln 60, 61 fassen jeweils einen Randbereich 15, 25 des Obertrums 6 des Transportbandes 5 beidseitig ein und sorgen auf diese Weise für ein Hochbiegen der Randbereiche 15, 25 bei flach bleibendem Zwischenbereich 32. Auch hier erstrecken sich die Führungsbleche 38, 39 über nahezu die gesamte Länge des Obertrums 6 zwischen den Umlenkwalzen 3, 4.

Figur 9 zeigt eine weitere Ausführungsform einer Führungseinrichtung 62. Sie hat eine Sockelplatte 63, von der Halterungen 64, 65 aufrecht stehen. An den Halterungen 64, 65 befestigt ist eine Führungswanne 67 mit einem ebenen Mittenbereich 68 und seitlichen Randstreifen 69, 70, die schräg hochgestellt sind. Die Führungswanne 67 prägt dem Obertrum 6 des Transportbandes 5 die innenseitige Formgebung auf, so dass auch hier hochgebogene Randbereiche 15, 25 entstehen. Die Führungswanne 67 entspricht in ihrer Länge etwa dem Abstand zwischen der Aufgabeeinrichtung 11 (Figur 1) und der Umlenkwalze 4 (Figur 1) .

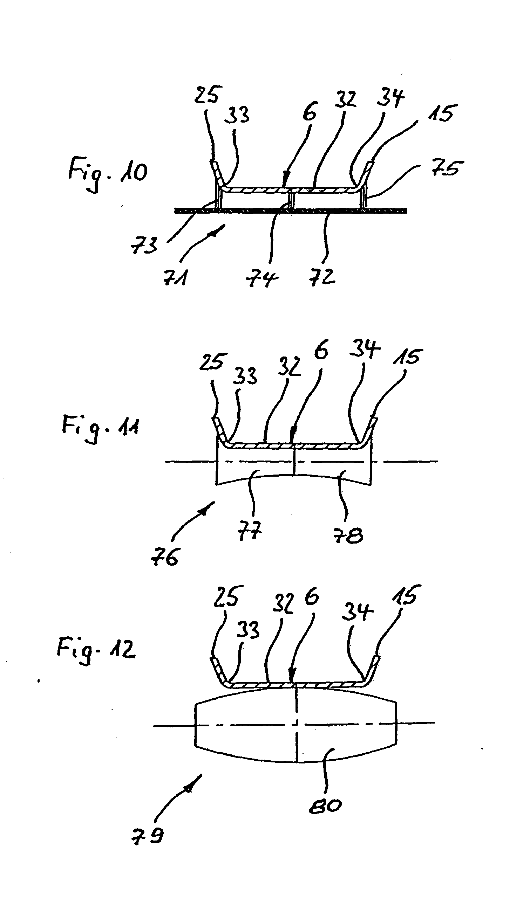

In Figur 10 ist eine Führungseinrichtung 71 dargestellt, bei der von einer Sockelplatte 72 feststehende Führungsstützen 73, 74, 75 hoch stehen. Die seitlichen Führungsstützen 73, 75 sorgen für ein Hochbiegen der Randbereiche 15, 25 des Obertrums 6, während die mittlere Führungsstütze 74 den Mittenbereich des Zwischenbereichs 32 unterstützt und dort ein Ausbeulen verhindert. Über die Länge des Bereichs, in der die Randbereiche 15, 25 hochgebogen sind, sind eine Vielzahl solcher Führungsstützten 73, 74, 75 verteilt.

In Figur 11 ist eine Führungseinrichtung 76 zu sehen, die eine Vielzahl von in Laufrichtung des Transportbandes 5 hintereinander (senkrecht zur Zeichnungsebene) angeordneten Paaren von Formwalzen 77, 78 aufweist. Im Unterschied zu dem Ausführungsbeispiel gemäß Figur 3 sorgen die Formwalzen 77, 78 nicht nur für ein Hochbiegen der Randbereiche 15, 25, sondern unterstützen auch die Unterseite des Zwischenbereichs 32. Auf diese Weise ist die Tragfähigkeit des Zwischenbereichs 32 erhöht, ohne dass die Gefahr besteht, dass der Zwischenbereich 32 seine ebenen Erstreckung verliert.

In Figur 12 ist nur ein Teil einer Führungseinrichtung 79 dargestellt. Es fehlen diejenigen Teile der Führungseinrichtung 79, die für das Hochbiegen der Randbereiche 15, 25 sorgen. Unterhalb des Zwischenbereichs 32 des Obertrums 6 des Transportbandes 5 ist eine Stützwalze 80 angeordnet, die an ihrem Umfang konvex-ballig geformt ist. Auf diese Weise konzentriert sich die Unterstützung der Stützwalze 80 auf den mittleren Bereich des Zwischenbereichs 32 mit der Folge, dass der Zwischenbereich 32 trotz hochgebogener Randbereiche 15, 25 eben bleibt. Es versteht sich, dass senkrecht zur Zeichnungsebene, d.h. in Laufrichtung des Obertrums 6, eine Vielzahl solcher Stützwalzen 80 hintereinander und mit ihren Drehachsen in horizontaler Ebene angeordnet sind. Solche Stützwalzen 80 können auch bei den Führungseinrichtungen gemäß den Figuren 3 bis 8 vorgesehen sein.

## Patentansprüche

1. Vorrichtung zur Herstellung von Schichtmaterial mit einem Transportband (5), das mittels einer Umlaufeinrichtung in eine Umlaufbewegung bringbar ist, sowie mit einer dem Transportband (5) zugeordneten Aufgabeeinrichtung (11), über die Material zwecks Ausbildung des Schichtmaterials auf das Transportband (5) aufgebbar ist, **dadurch gekennzeichnet, dass** das Transportband (5) in Querrichtung eine solche Biegsamkeit aufweist, dass seine Randbereiche (15, 25) bei eben bleibendem Zwischenbereich (32) hochbiegbar sind, und dass die Vorrichtung eine Führungseinrichtung (26, 35, 41, 47, 50, 54, 62, 71, 76, 79) zumindest im Bereich der Aufgabeeinrichtung (11) aufweist, mittels der die Randbereiche (15, 25) des Transportbandes (5) bei dessen Umlauf hochgebogen werden.

2. Vorrichtung nach Anspruch 1, **dadurch gekennzeichnet, dass** das Transportband (5) einen textilen Träger (17) aufweist.

3. Vorrichtung nach Anspruch 2, **dadurch gekennzeichnet, dass** der textile Träger (17) Fäden aufweist, von denen wenigstens ein Teil Wärmeleitfäden (18, 19, 20) bildet, deren spezifische Wärmeleitfähigkeit höher ist als die von Kunststofffäden.

4. Vorrichtung nach Anspruch 3, **dadurch gekennzeichnet, dass** der Träger (17) in einer Matrix (22) aus einem Kunststoffmaterial derart eingebettet ist, dass Wärmeleitfäden (18, 19, 20) wenigstens bis zur Oberfläche der Matrix (22) auf zumindest einer Außenseite gehen.

5. Vorrichtung nach einem der Ansprüche 1 bis 4, **dadurch gekennzeichnet, dass** das Transportband (5) zumindest an seiner Außenseite eine antiadhäsive Oberfläche aufweist.

6. Vorrichtung nach einem der Ansprüche 1 bis 5, **dadurch gekennzeichnet, dass** das Transportband (5) an zumindest einer Stelle unter Bildung von Stirnkanten geteilt ist und die Stirnkanten über eine Kupplungseinrichtung (7) verbunden sind, die am Übergang (33, 34) von den Randbereichen (15, 25) zu dem Zwischenbereich (32) unterbrochen ist.

7. Vorrichtung nach einem der Ansprüche 1 bis 6, **dadurch gekennzeichnet, dass** die Steifigkeit des Transportbandes (5) zumindest an den Übergängen vom Zwischenbereich (32) zu den Randbereichen (15, 25) geringer ist als die des Zwischenbereichs (32).

8. Vorrichtung nach einem der Ansprüche 1 bis 7, **dadurch gekennzeichnet, dass** die Führungseinrichtung (26, 35, 41, 47, 50, 54, 62, 71, 76, 79) Formrollen (28, 29, 39, 40, 77, 78) und/oder Führungsbleche (52, 53, 60, 61, 68) und/oder -stützen (73, 74, 75) aufweist, die zumindest an der Unterseite des Transportbandes (5) anliegen und derart ausgerichtet sind, dass sie ein Hochbiegen der Randbereiche (15, 25) bewirken.

9. Vorrichtung nach Anspruch 8, **dadurch gekennzeichnet, dass** die Formrollen (77, 78) bzw. Führungsbleche (68) und/oder -stützen (73, 74, 75) so ausgebildet sind, dass sie nicht nur die Randbereiche (15, 25) des Transportbandes (5), sondern auch dessen Zwischenbereich (32) zumindest teilweise unterstützen.

10. Vorrichtung nach Anspruch 8 oder 9, **dadurch gekennzeichnet, dass** die Führungseinrichtung (54) Führungsrollen, Führungsbleche (58, 59) und/oder Führungsstützen aufweisen, die derart angeordnet und ausgebildet sind, dass sie die Randbereiche (15, 25) des Transportbandes (5) beidseitig einfassen.

11. Vorrichtung nach einem der Ansprüche 1 bis 10, **dadurch gekennzeichnet, dass** die Führungseinrichtung (41) auf zumindest die Randbereiche (15, 25) des Transportbandes (5) gerichtete pneumatische Strahldüsen (45, 46) aufweist, über die ein derartiger Luftdruck auf die Randbereiche (15, 25) ausübbar ist, dass ein Hochbiegen der Randbereiche (15, 25) bewirkt wird.

12. Vorrichtung nach einem der Ansprüche 1 bis 11, **dadurch gekennzeichnet, dass** die Führungseinrichtung (47) wenigstens eine Andrückrolle (48) und/oder wenigstens ein Andrückblech aufweist, die bzw. das derart angeordnet ist, dass sie bzw. es auf der Oberseite des Zwischenbereichs (32) zwecks dessen ebenen Ausrichtung anliegt.

13. Vorrichtung nach einem der Ansprüche 1 bis 12, **dadurch gekennzeichnet, dass** die Führungseinrichtung (62, 71, 76, 79) Unterstützungsrollen (77, 78, 80) oder Unterstützungsflächen (74) aufweist, über die die Unterseite des Zwischenbereichs (32) des Transportbandes (5) läuft.

14. Vorrichtung nach einem der Ansprüche 1 bis 13, **dadurch gekennzeichnet, dass** die Randbereiche (15, 25) des Transportbandes (5) um wenigstens 30°, vorzugsweise um wenigstens 45°, gegenüber der Horizontalen hochgebogen sind.

15. Vorrichtung nach einem der Ansprüche 1 bis 14, **dadurch gekennzeichnet, dass** die Breite der Randbereiche (15, 25) wenigstens 5 cm, vorzugsweise wenigstens 10 cm betragen.
